(19)

Europäisches Patentamt
European Patent Office
Office européen des brevets

(11) **EP 3 409 802 A1**

(12) **EUROPEAN PATENT APPLICATION**

(43) Date of publication:
05.12.2018 Bulletin 2018/49

(51) Int Cl.:
*C22C 28/00* (2006.01)    *B32B 15/01* (2006.01)
*F25B 21/00* (2006.01)    *H01F 1/01* (2006.01)

(21) Application number: 18159574.5

(22) Date of filing: 01.03.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.05.2017 JP 2017106215

(71) Applicant: Fujikura, Ltd.
Tokyo 135-8512 (JP)

(72) Inventors:
• Nomura, Ryujiro
  Chiba, 285-8550 (JP)

• Kizaki, Takeshi
  Chiba, 285-8550 (JP)
• Takeuchi, Katsuhiko
  Chiba, 285-8550 (JP)
• Kondo, Masahiro
  Chiba, 285-8550 (JP)
• Ishikawa, Kohki
  Chiba, 285-8550 (JP)
• Ueno, Kota
  Chiba, 285-8550 (JP)

(74) Representative: Ter Meer Steinmeister & Partner
Patentanwälte mbB
Artur-Ladebeck-Strasse 51
33617 Bielefeld (DE)

(54) **GADOLINIUM WIRE ROD AND METAL-COVERED GADOLINIUM WIRE ROD, HEAT EXCHANGER, AND MAGNETIC REFRIGERATOR USING THE SAME**

(57)    Provided is a gadolinium wire rod including gadolinium as a main component and having a Vickers hardness (HV) 120 or less.

Fig. 1

EP 3 409 802 A1

**Description**

BACKGROUND OF THE INVENTION

Field of the Invention

The present invention relates to a gadolinium wire rod including gadolinium as a main component, and a metal-covered gadolinium wire rod, a heat exchanger and a magnetic refrigerator using the same.

Description of the Related Art

Magnetic refrigeration technologies utilizing the magnetocaloric effect have been studied. As one promising magnetic refrigeration technology, an AMR (Active Magnetic Refrigeration) cycle is exemplified. In such a magnetic refrigeration technology, effective methods for increases in efficiency and output include a method including increasing the surface area of a magnetic refrigeration material to thereby enhance the heat-exchange efficiency from the magnetic refrigeration material to a refrigerant, and a method including ensuring the flow path for a refrigerant to thereby reduce the pressure loss. The magnetic refrigeration material for use in such a magnetic refrigeration technology usually has a particle shape, and such a particle-shaped magnetic refrigeration material is inserted into a tubular case to provide a heat exchanger. There has been proposed a magnetic refrigerator in which such a heat exchanger is adopted (see, for example, Japanese Patent Publication No. 2010-77484). On the other hand, there has been proposed a method for increases in efficiency and output by using even a magnetic refrigeration material processed into a cylinder (linear object), whereas a common magnetic refrigeration material has a particle shape (see, for example, Japanese Patent Publication No. 2013-64588).
On the other hand, since gadolinium as a rare-earth metal has been known as a magnetic refrigeration material from a long time ago and is also easily processed, gadolinium is expected to be applied to magnetic refrigeration technologies utilizing the magnetocaloric effect. As described in Japanese Patent Publication No. 2013-64588, when a heat exchanger is prepared by processing such a magnetic refrigeration material including gadolinium into a cylinder (linear object) and inserting the cylinder (linear object) into a tubular case, the flow path for a refrigerant can be sufficiently ensured to thereby enable a reduction in pressure loss to be achieved, and as a result, an enhancement in magnetic refrigeration efficiency can be achieved to a certain extent. But there has been demanded a further enhancement in magnetic refrigeration efficiency, in particular, an enhancement in magnetic refrigeration ability of a gadolinium wire rod by itself.
An object of the present invention is to provide a gadolinium wire rod enhanced in magnetic refrigeration ability. Another object of the present invention is to provide a metal-covered gadolinium wire rod in which a clad layer including other metal is provided on the outer periphery of the gadolinium wire rod, and a heat exchanger and a magnetic refrigerator using the gadolinium wire rod and the metal-covered gadolinium wire rod.

SUMMARY OF THE INVENTION

[1] The gadolinium wire rod according to the present invention is a gadolinium wire rod including gadolinium as a main component and having a Vickers hardness (HV) is 120 or less.
[2] The present invention can be configured so that an average particle size of a segregated phase containing fluorine atom and/or chlorine atom is 2 $\mu$m or less.
[3] The present invention can be configured so that a presence density of a segregated phase containing fluorine atom and/or chlorine atom with a particle size of 5 $\mu$m or more is 4.7 $\times$ 10$^{-5}$/$\mu$m$^2$ or less.
[4] The present invention can be configured so that the gadolinium wire rod has a diameter of less than 0.5 mm.
[5] In the metal-covered gadolinium wire rod according to the present invention, a clad layer including, as a main component, a metal other than gadolinium is provided on an outer periphery of the gadolinium wire rod according to the present invention.
[6] The heat exchanger according to the present invention includes:

a plurality of wire rods formed of a magnetic refrigeration material; and
a case housing the plurality of wire rods;
wherein the wire rods are each the gadolinium wire rod according to the present invention or the metal-covered gadolinium wire rod according to the present invention.

[7] The magnetic refrigerator according to the present invention includes the heat exchanger according to the present invention.

The present invention can provide a gadolinium wire rod enhanced in magnetic refrigeration ability. The present invention can also provide a metal-covered gadolinium wire rod in which a clad layer including other metal is provided on the outer periphery of the gadolinium wire rod, and a heat exchanger and a magnetic refrigerator which are obtained by using the gadolinium wire rod and the metal-covered gadolinium wire rod and which are excellent in heat-exchange efficiency.

BRIEF DESCRIPTION OF THE DRAWINGS

Figure 1 illustrates the entire configuration of a magnetic refrigerator including an MCM heat exchanger according to one embodiment of the present invention;
Figure 2 is an exploded perspective view illustrating the configuration of an MCM heat exchanger according to one embodiment of the present invention;
Figure 3(A) is a reflection electron image of a swaged material of Example 1, and Figure 3(B) is a reflection electron image after binarization processing, where the reflection electron image of Figure 3(A) is subjected to binarization processing;
Figure 4(A) is a reflection electron image of a drawn wire rod of Example 1, and Figure 4(B) is a reflection electron image after binarization processing, where the reflection electron image of Figure 4(A) is subjected to binarization processing;
Figure 5 is a graph representing a relationship between the measurement temperature and the amount of entropy change $\Delta S_m$ in a condition of a magnetic flux density of 1 T, of Sample Nos. 1 to 7 in Example 1; and
Figure 6 is a graph representing a relationship between the measurement temperature and the amount of entropy change $\Delta S_m$ in a condition of a magnetic flux density of 1 T, of Sample Nos. 8 and 9 in Example 2.

DETAILED DESCRIPTION OF THE PREFERRED EMBODIMENTS

<<Gadolinium wire rod>>

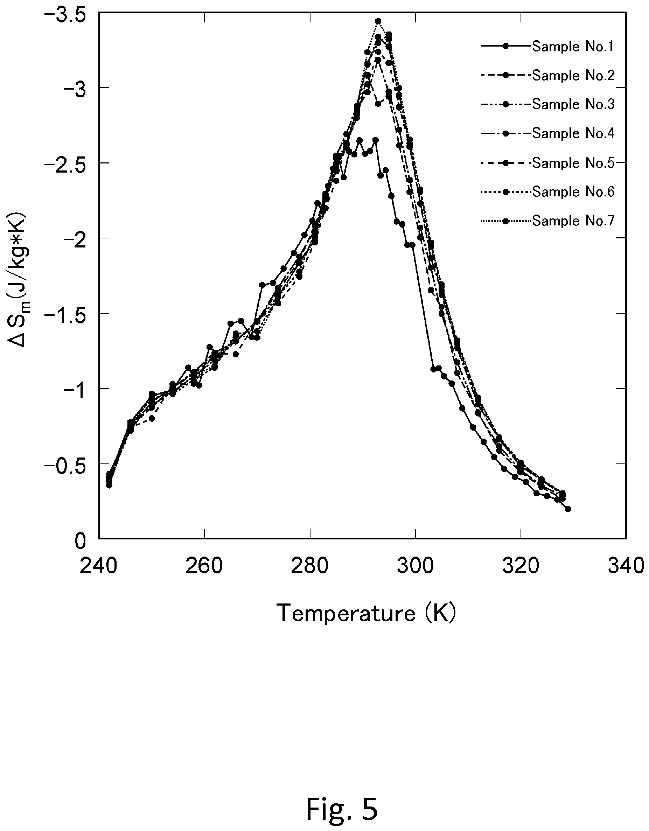

A gadolinium wire rod of the present embodiment includes gadolinium (Gd) as a main component, and may include a gadolinium alloy. The gadolinium wire rod of the present embodiment may include gadolinium as a main component, and the content of gadolinium in the gadolinium wire rod is preferably 80% by weight or more, more preferably 95% by weight or more, further preferably 99% by weight or more. When the gadolinium wire rod of the present embodiment includes gadolinium as a main component in the form of a gadolinium alloy, the content of gadolinium in the gadolinium wire rod is preferably 50% by weight or more, more preferably 60% by weight or more, further preferably 70% by weight or more. Examples of the gadolinium alloy include an alloy of gadolinium and a rare-earth element. Examples of the rare-earth element include Y, Sc, La, Ce, Pr, Nd, Pm, Sm, Eu, Tb, Dy, Ho, Er, Tm, Yb and Lu, and among them, an alloy of gadolinium and Y, $Gd_{95}Y_5$, and the like are exemplified.
In the gadolinium wire rod of the present embodiment, the Vickers hardness (HV) is 120 or less.
The gadolinium wire rod includes gadolinium (Gd) as a main component. Gadolinium is a material exerting the magnetocaloric effect, and therefore the change in entropy occurs in application of a magnetic field. The amount of entropy change $\Delta S_m$ [unit: J/kg●K] in application of a magnetic field to the gadolinium wire rod then varies, of course, depending on the magnitude of the magnetic field applied (the magnitude of the magnetic flux density), and also varies depending on the environmental temperature as illustrated in Figure 5. Herein, Figure 5 is a graph representing a relationship between the environmental temperature and the amount of entropy change $\Delta S_m$ in application of a magnetic field where the magnitude of the magnetic flux density is 1 T, of Sample Nos. 1 to 7 in Example 1 described below.
On the contrary, in the present embodiment, there is focused on a relationship between a value where the absolute value of such an amount of entropy change $\Delta S_m$ varying depending on the environmental temperature is maximum, namely, the maximum value $S_{max}$ [unit: J/kg●K] of the absolute value of the amount of entropy change, and the Vickers hardness (HV) of the gadolinium wire rod, and it has been thus found that, when the Vickers hardness (HV) is 120 or less, an excellent $S_{max}$ value is obtained, and that the gadolinium wire rod can be thus enhanced in magnetic refrigeration ability.
In the present embodiment, the method for measuring the amount of entropy change $\Delta S_m$ in application of a magnetic field to the gadolinium wire rod is not particularly limited as long as it is a method where the amount of entropy of the gadolinium wire rod can be measured in a condition where application of a magnetic field can be made, and examples include a method including measuring the magnetic susceptibility in a condition of application of a predetermined magnetic field (for example, a magnetic field of 0 to 1 T) with a magnetic property measurement apparatus (for example, "MPMS-5T" manufactured by Quantum Design Japan), and determining the amount of entropy change $\Delta S_m$

from the magnetic susceptibility before and after application of such a magnetic field.

Such measurement of the amount of entropy change $\Delta S_m$ can be then performed at a measurement temperature, for example, in the temperature range from 240 to 330 K, thereby determining the maximum value $S_{max}$ [unit: J/kg●K] of the absolute value of the amount of entropy change $\Delta S_m$. Gadolinium, and an alloy including gadolinium as a main component usually have the maximum value $S_{max}$ of the absolute value of the amount of entropy change $\Delta S_m$ in the temperature range from 240 to 330 K, and therefore the measurement may be performed in the temperature range from 240 to 330 K. In the measurement, the magnetic field application direction may be a direction in parallel to the longitudinal direction of the gadolinium wire rod (namely, the magnetic field application direction is the same direction as the longitudinal direction of the gadolinium wire rod). It is here desirable in view of reducing the influence of the distance from the magnetic field generation source that a cut sample obtained by cutting the gadolinium wire rod to a length of preferably 3 to 6 mm be used for performing the measurement. This measurement may be performed using a plurality of samples (for example, three samples).

In the gadolinium wire rod of the present embodiment, the Vickers hardness (Hv) is 120 or less, and is preferably 110 or less, more preferably 100 or less, further preferably 90 or less in view of achieving a more excellent $S_{max}$ value to thereby allow magnetic refrigeration ability to be more enhanced. The lower limit of the Vickers hardness (Hv) is not particularly limited, and is usually 50 or more, preferably 60 or more in view of keeping shape stability. The Vickers hardness (Hv) of the gadolinium wire rod can be measured by, for example, the following method. Specifically, the gadolinium wire rod is first cut at any interval, and the resulting transverse section is embedded in a resin such as an epoxy resin and polished to thereby smoothen the transverse section, thereby providing a measurement sample. Five of such measurement samples are prepared. A Vickers hardness meter is then used to apply 50 g of a load, for 10 seconds, to the center portion of the transverse section of each of the five measurement samples with respect to the gadolinium wire rod, and the indentation produced by such application is subjected to measurement, thereby measuring the Vickers hardness of each of the five measurement samples. The maximum value and the minimum value are then excluded from the resulting measurement values of the Vickers hardness of the five measurement samples, the remaining three measurement values are used to calculate the average value, and the resulting average value is determined as the Vickers hardness (Hv) of the gadolinium wire rod. The Vickers hardness meter is not particularly limited, and for example, a manual hardness tester (HM-200 system A manufactured by Mitutoyo Corporation) can be used.

The diameter of the gadolinium wire rod of the present embodiment is preferably as fine as 1.0 mm or less, more preferably less than 0.5 mm, further preferably 0.3 mm or less. The gadolinium wire rod can be thus finer to thereby result in not only an increase in heat-exchange efficiency with a refrigerant due to an increase in surface area, but also a more enhancement in magnetic refrigeration ability of the gadolinium wire rod by itself, namely, the maximum value $S_{max}$ of the absolute value of the amount of entropy change $\Delta S_m$ of the gadolinium wire rod, thereby resulting in a further increase in the heat-exchange efficiency. Herein, the lower limit of the diameter of the gadolinium wire rod of the present embodiment is not particularly limited, and is usually 0.05 mm or more in terms of productivity.

The maximum value $S_{max}$ [unit: J/kg●K] of the absolute value of the amount of entropy change $\Delta S_m$ of the gadolinium wire rod of the present embodiment is not particularly limited, and preferably satisfies the following expression (1):

$$S_{max} \geq 2.9x \quad (1)$$

wherein x represents the magnitude of the magnetic field applied [unit: T], and $0 < x \leq 1$ is satisfied.

A method for producing the gadolinium wire rod of the present embodiment is not particularly limited, and the gadolinium wire rod can be produced by, for example, subjecting a casting material of gadolinium to hot swaging, to thereby provide a swaged material, drawing (extending) the resulting swaged material to thereby impart a desired wire diameter, and thereafter subjecting the resulting drawn material to anneal (heat treatment).

Hereinafter, a specific production method will be described.

First, a round rod material having a predetermined diameter is cut out from a casting material of gadolinium, and hot swaging is repeated at a reduction of area of 10 to 50% with the round rod material cut out being pre-heated, to thereby provide a swaged material. Herein, a method is preferable which includes performing such processing until the final reduction of area after hot swaging preferably reaches 90% or more, more preferably 95% or more, further preferably 97% or more. The preheating temperature in such hot swaging is preferably 400°C or more, more preferably 500°C or more, further preferably 600°C or more.

Herein, gadolinium and a gadolinium alloy constituting the gadolinium wire rod of the present embodiment usually include small amounts of unavoidable impurities. Examples of such unavoidable impurities include oxide-based impurities including carbon and oxygen, halogen-based impurities such as fluorine and chlorine, and rare metal-based impurities such as tungsten.

On the other hand, according to findings of the present inventors, impurities included in a gadolinium wire rod, in particular, a segregated phase containing fluorine atom and/or chlorine atom, may serve as the point of origin of cracking, to result in a reduction in the strength of the gadolinium wire rod, and also deterioration in processability during various processings such as drawing (extending).

On the contrary, according to the present embodiment, such repeated hot swaging can allow a phase containing a fluorine atom and/or a chlorine atom in large amounts and included in a gadolinium wire to become finer. Thus, the segregated phase containing fluorine atom and/or chlorine atom can be then effectively prevented from serving as the point of origin of cracking, thereby allowing the strength of the gadolinium wire rod to be excellent, and allowing various processings such as drawing (extending) to be favorably performed. Although a case where hot swaging is performed is exemplified and described in the present embodiment, hot processing is not particularly limited to hot swaging, and any method including other hot-processing, for example, casting, rolling or extrusion can be used as long as the phase containing a fluorine atom and/or a chlorine atom in large amounts can become suitably finer.

Next, the resulting swaged material may be drawn (extended) using a die or the like, to impart a desired wire diameter and thus provide a drawn material. In the present embodiment, the diameter of the drawn material after drawing (namely, the diameter of the gadolinium wire rod) is preferably as fine as 1.0 mm or less, more preferably less than 0.5 mm, further preferably 0.3 mm or less, particularly preferably 0.25 mm in view of a further increase in heat-exchange efficiency. In particular, according to the present embodiment, the hot swaging can allow a phase containing a fluorine atom and/or a chlorine atom in large amounts and included in gadolinium and/or a gadolinium alloy to become finer, thereby favorably performing drawing (extending) to thereby properly provide a finer wire diameter. Herein, the lower limit of the diameter of the drawn material after drawing (namely, the diameter of the gadolinium wire rod) is not particularly limited, and it is usually 0.05 mm or more in terms of productivity.

In the present embodiment, the drawn material thus obtained is then subjected to anneal (heat treatment), thereby providing the gadolinium wire rod of the present embodiment. The conditions in performing of such anneal are not particularly limited, and there is preferably performed under any conditions where the Vickers hardness (Hv) is less than 120 by such anneal. Specifically, such anneal is preferably performed in conditions of an anneal temperature of preferably 250 to 700°C, more preferably 300 to 600°C and an anneal time of preferably 1 second to 3600 minutes, more preferably 5 seconds to 120 minutes. In addition, such anneal is preferably performed in a non-oxidizing atmosphere (for example, nitrogen atmosphere or argon atmosphere) in view of preventing oxidation of the gadolinium wire rod surface.

Although a method for allowing the Vickers hardness (Hv) of the gadolinium wire rod to be less than 120 by anneal is exemplified above, there is not particularly limited to such a method by anneal, and any method can be used without any limitation as long as it is a method which enables the Vickers hardness (Hv) to be less than 120.

The gadolinium wire rod of the present embodiment preferably has a specified fine structure in view of enhancing not only magnetic refrigeration ability but also the strength thereof. As described above, the gadolinium wire rod of the present embodiment unavoidably includes oxide-based impurities including carbon and oxygen, halogen-based impurities such as fluorine and chlorine, and rare metal-based impurities such as tungsten. On the contrary, in the present embodiment, a segregated phase containing fluorine atom and/or chlorine atom, among such impurities, is preferably finer, and specifically, the fine structure thereof is more preferably a first fine structure and/or a second fine structure described below.

Specifically, in the present embodiment, the average particle size of the segregated phase containing fluorine atom and/or chlorine atom unavoidably included in the gadolinium wire rod is preferably controlled to be 2 $\mu$m or less, which is a first fine structure mode.

In the first fine structure mode, the segregated phase containing fluorine atom and/or chlorine atom means a phase where a fluorine atom and/or a chlorine atom are/is localized (a phase containing a fluorine atom and/or a chlorine atom in large amounts), and may be any of phases such as a phase where a fluorine atom and/or a chlorine atom are/is contained in the form of a fluoride and/or chloride of gadolinium, and a phase where a fluorine atom and/or a chlorine atom are/is contained in the form of an oxide, nitride or the like.

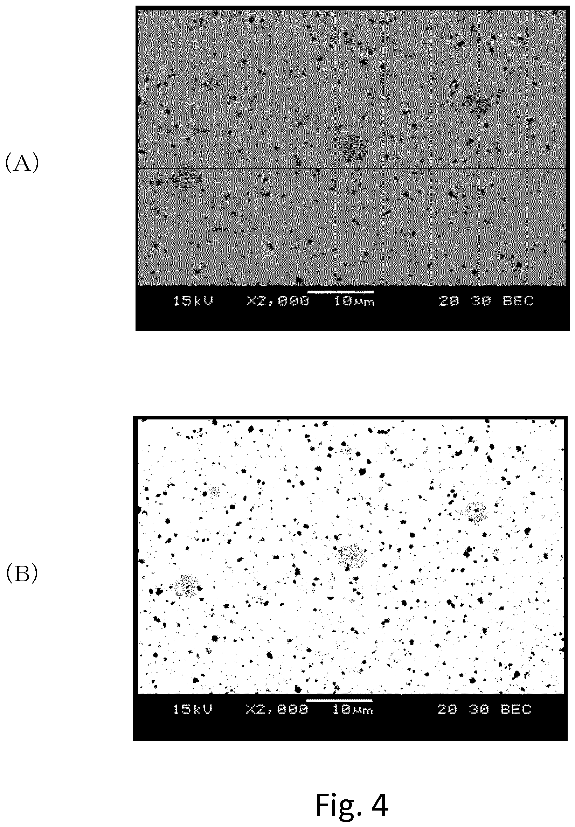

The segregated phase containing fluorine atom and/or chlorine atom is, for example, a phase where a fluorine atom and/or a chlorine atom are/is localized to an extent such that the fluorine atom and/or chlorine atom concentration detected is 1% or more when the total atom concentration of gadolinium, fluorine, chlorine, calcium, iron, oxygen, yttrium and tungsten elements is taken as 100% at a measurement point in measurement of the strength of fluorine atom and/or chlorine atom detected on any cross section of the gadolinium wire, according to a componential analysis method by EDS (Energy Dispersive Spectroscopy) analysis. These can be detected by, for example, subjecting any cross section of the gadolinium wire to measurement of a reflection electron image with a scanning electron microscope (SEM). Specifically, these can be detected by performing binarization at a predetermined threshold by use of image analysis with respect to the reflection electron image obtained with a scanning electron microscope. For example, Figure 4(A) and Figure 4(B) illustrate a reflection electron image of a cross section of a gadolinium wire according to Examples of the present invention and a reflection electron image after binarization by image analysis with respect to the reflection electron image of Figure 4(A), respectively. In Figure 4(B), the segregated phase containing fluorine atom and/or chlorine atom is detected as a heterogeneous phase illustrated by a black color. Herein, the predetermined threshold for use in binarization may be set to a threshold at which a phase where a fluorine atom and/or a chlorine atom are/is localized to an extent such that the fluorine atom and/or chlorine atom concentration detected is 1% or more when the total atom concentration of gadolinium, fluorine, chlorine, calcium, iron, oxygen, yttrium and tungsten elements, detected according to a componential analysis method or the like by EDS (Energy Dispersive Spectroscopy) analysis, is taken as 100% at a measurement point of the measurement region of any cross section of the gadolinium wire.

Alternatively, a secondary electron image obtained by measurement with a scanning electron microscope may be used in combination in the above method to further analyze the heterogeneous phase illustrated by a black color in Figure 4(B).

The segregated phase containing fluorine atom and/or chlorine atom thus detected can be then subjected to particle size measurement and the arithmetic average of the obtained particle size measurement results can be determined to thereby determine the average particle size of the segregated phase containing fluorine atom and/or chlorine atom. Specifically, any five locations on the cross section of the gadolinium wire are subjected to reflection electron image measurement in the visual field range of 256 $\mu$m $\times$ 166 $\mu$m, and five reflection electron images obtained by measurement in the visual field range of 256 $\mu$m $\times$ 166 $\mu$m are used to determine the average particle size. Herein, the segregated phase containing fluorine atom and/or chlorine atom is approximated to a circle having the same area by use of image analysis technique to thereby determine a circle equivalent diameter, and the circle equivalent diameter is defined as the particle size of each segregated phase. Furthermore, in average particle size measurement, the average particle size is to be determined under the assumption that a heterogeneous phase with a particle size of 1 $\mu$m or less does not correspond to the segregated phase containing fluorine atom and/or chlorine atom in calculation of the average particle size, from the viewpoint that any measurement error and any influence of a heterogeneous phase other than the segregated phase containing fluorine atom and/or chlorine atom are removed.

Alternatively, there may be adopted, instead of the above method where measurement is conducted at any five locations on the cross section perpendicular to the wire rod longitudinal direction, a method including cutting the gadolinium wire as a drawn wire at any five locations to obtain any five cross sections perpendicular to the wire rod longitudinal direction, subjecting each of the resulting five cross sections (N = 5) to reflection electron image measurement in the visual field range of 256 $\mu$m $\times$ 166 $\mu$m, and using five reflection electron images obtained by the measurement in the visual field range of 256 $\mu$m $\times$ 166 $\mu$m to determine the average particle size. With respect to the measurement range on each cut cross section, when the size of the cut cross section is a size where the measurement in the visual field range of 256 $\mu$m $\times$ 166 $\mu$m can be made, the measurement may be conducted in the visual field range of 256 $\mu$m $\times$ 166 $\mu$m, or when the size of the cut cross section is a size where the measurement in the visual field range of 256 $\mu$m $\times$ 166 $\mu$m cannot be made (the size of the cut cross section is less than 256 $\mu$m $\times$ 166 $\mu$m), the measurement may be conducted on the entire cut cross section. In particular, when the measurement in the visual field range of 256 $\mu$m $\times$ 166 $\mu$m cannot be made on one cross section (the size of the cut cross section is less than 256 $\mu$m $\times$ 166 $\mu$m), for example, when the wire diameter of the gadolinium wire rod is small, such a method is desirably adopted.

In the first fine structure mode, the average particle size of the segregated phase containing fluorine atom and/or chlorine atom unavoidably included in the gadolinium wire rod is 2 $\mu$m or less, preferably 1.8 $\mu$m or less. When the average particle size of the segregated phase containing fluorine atom and/or chlorine atom is 2 $\mu$m or less, the strength of the gadolinium wire rod can be more enhanced, thereby allowing characteristics of various processings such as drawing (extending) to be excellent and allowing the gadolinium wire rod to be finer.

Alternatively, in the present embodiment, the presence density of a segregated phase of 5 $\mu$m or more (namely, the number present per unit area) in the segregated phase containing fluorine atom and/or chlorine atom unavoidably included in the gadolinium wire rod, namely, the presence density of a segregated phase containing fluorine atom and/or chlorine atom with a particle size of 5 $\mu$m or more therein (hereinafter, sometimes referred to as "the presence density of the segregated phase of 5 $\mu$m or more".) is preferably set to $4.7 \times 10^{-5}/\mu m^2$ or less, which is the second fine structure mode.

In the second fine structure mode, the segregated phase containing fluorine atom and/or chlorine atom means a phase where a fluorine atom and/or a chlorine atom are/is localized. For example, it may be any of phases such as a phase where a fluorine atom and/or a chlorine atom are/is contained in the form of a fluoride and/or chloride of gadolinium, and a phase where a fluorine atom and/or a chlorine atom are/is contained in the form of an oxide, nitride or the like, as in the first fine structure mode described above, and can be detected by, for example, measurement of a reflection electron image with a scanning electron microscope (SEM). Alternatively, a secondary electron image obtained by measurement with a scanning electron microscope may also be used in combination, as in first fine structure mode.

The presence density of the segregated phase of 5 $\mu$m or more can be determined by subjecting the segregated phase containing fluorine atom and/or chlorine atom detected in the same manner as in the first fine structure mode described above, to particle size measurement, counting the number of segregated phase(s) of 5 $\mu$m or more, and dividing the number of segregated phase(s) of 5 $\mu$m or more by the measurement area (unit: $\mu$m$^2$). Specifically, the presence density of the segregated phase of 5 $\mu$m or more can be determined by cutting the gadolinium wire as a drawn wire at any five locations to provide any five cross sections perpendicular to the wire rod longitudinal direction, subjecting the resulting five cross sections (N = 5) to reflection electron image measurement in the viewing field range depending on the size of each of the cut cross sections, and counting the number of segregated phase(s) of 5 $\mu$m or more and dividing it by the measurement area (unit: $\mu$m$^2$). Herein, the segregated phase containing fluorine atom and/or chlorine atom detected is approximated to a circle having the same area by use of image analysis technique to thereby determine a circle equivalent diameter, and the circle equivalent diameter is defined as the particle size of each segregated phase. With respect to the measurement range on each cut cross section, when the size of the cut cross section is a size where the measurement in the visual field range of 256 $\mu$m $\times$ 166 $\mu$m can be made, the measurement may be conducted in the visual field range of 256 $\mu$m $\times$ 166 $\mu$m, or when the size of the cut cross section is a size where the measurement in the visual field range of 256 $\mu$m $\times$ 166 $\mu$m cannot be made (the size of the cut cross section is less than 256 $\mu$m $\times$ 166 $\mu$m), the measurement may be conducted on the entire cut cross section.

In the second fine structure mode, the presence density of the segregated phase of 5 $\mu$m or more unavoidably included in the gadolinium wire rod is $4.7 \times 10^{-5}/\mu m^2$ or less, preferably $3.0 \times 10^{-5}/\mu m^2$ or less, more preferably $2.7 \times 10^{-5}/\mu m^2$ or less. When the presence density of the segregated phase of 5 $\mu$m or more is $4.7 \times 10^{-5}/\mu m^2$ or less, the strength of the gadolinium wire can be more enhanced, thereby allowing characteristics of various processings such as drawing (extending) to be more excellent and allowing the gadolinium wire rod to be finer.

The method for allowing the fine structure of the gadolinium wire rod of the present embodiment to the above-mentioned first fine structure and/or second fine structure is not particularly limited. Examples include a method including repeating hot swaging as described above to thereby perform such processing until the above reduction of area is achieved, but are not particularly limited to such a method.

<<Metal-covered gadolinium wire rod>>

A metal-covered gadolinium wire rod according to the present embodiment includes a clad layer including, as a main component, a metal other than gadolinium, formed on the outer periphery of the gadolinium wire rod of the present embodiment above described.

According to the metal-covered gadolinium wire rod according to the present embodiment, a clad layer including, as a main component, a metal other than gadolinium can be formed on the outer periphery of the gadolinium wire rod of the present embodiment above described, thereby allowing processability into a drawn wire rod to be more enhanced. In particular, in the case of drawing (extending) with a die or the like, a metal hardly sticking to the die can be selected as the metal other than gadolinium, for formation of the clad layer, to thereby properly prevent the occurrence of sticking to the die or the like in drawing, thereby allowing processability into a drawn wire rod to be enhanced.

The material for formation of the clad layer may be one including, as a main component, a metal other than gadolinium and is preferably, but not particularly limited to, copper, aluminum, nickel and/or an alloy thereof, more preferably copper or a copper alloy in view of satisfying drawability, corrosion resistance and thermal conductivity in a well-balanced manner. In particular, thermal conductivity is important in order that the amount of cold energy generated by a gadolinium wire as a core is properly transferred to the surface of the metal-covered gadolinium wire rod.

In order to complement thermal conductivity of the clad layer, the clad layer may contain a carbon-based material such as a carbon nanotube. The carbon nanotube may be a carbon-based material where a graphene sheet has a tubular shape, and may be any of a single-walled nanotube (SWNT) and a multi-walled nanotube (MWNT).

The metal-covered gadolinium wire rod of the present embodiment can be obtained by subjecting a casting material of gadolinium to hot swaging according to the above method to thereby provide a swaged material of gadolinium, thereafter covering the outer periphery of the swaged material of gadolinium with the clad layer including, as a main component, a metal other than gadolinium, and drawing and then annealing the resultant.

Specifically, the swaged material of gadolinium can be first inserted into a tubular member made of a metal material for formation of the clad layer, thereby covering the outer periphery of the swaged material of gadolinium with the clad layer including, as a main component, a metal other than gadolinium. In this case, after the swaged material of gadolinium is inserted into the tubular member made of a metal material for formation of the clad layer, the material and the tubular member may be subjected to a treatment for integration. When the swaged material of gadolinium is inserted into the tubular member, it is preferable to insert the swaged material of gadolinium into the tubular member after a treatment for removal of each of an oxide film on the surface of the swaged material of gadolinium and an oxide film on the inner wall surface of the tubular member. The method for removing such oxide films is not particularly limited, and examples thereof include a method including removal by washing with an acid or an alkali and a method including removal by mechanical polishing.

Next, the swaged material of gadolinium covered with the clad layer can be drawn (extended) using a die or the like, thereby providing a drawn wire rod having a desired wire diameter, and thereafter the drawn wire rod can be annealed, thereby providing the metal-covered gadolinium wire rod of the present embodiment. In particular, a metal hardly sticking to the die can be selected as the metal other than gadolinium, for formation of the clad layer, to thereby properly prevent the occurrence of sticking to the die or the like in drawing, thereby allowing excellent processability to be realized.

Therefore, according to the present embodiment, a drawn wire rod (metal-covered gadolinium wire rod) obtained by drawing the metal-covered gadolinium wire rod can be preferably as fine as 1.0 mm or less, more preferably less than 0.5 mm, further preferably 0.3 mm or less, particularly preferably 0.25 mm or less, and thus, when used as the magnetic refrigeration material in the magnetic refrigeration technology utilizing the magnetocaloric effect, the drawn wire rod is high in heat-exchange efficiency with the refrigerant and can be suitably used as the magnetic refrigeration material. Herein, the conditions of hot swaging, drawing (extending), and anneal may be the same as those for the gadolinium wire rod of the present embodiment described above.

In the present embodiment, in such a drawn wire rod drawn (extended) so as to have a desired wire diameter, the area occupied by the gadolinium wire in the cross section perpendicular to the longitudinal direction is preferably 55 to 99%, more preferably 60 to 95%, further preferably 65 to 95%, particularly preferably 75 to 95%, based on the area of the cross section.

The metal-covered gadolinium wire is smaller in the change in the surface temperature during application of a predetermined magnetic field than a gadolinium wire covered with no metal. It has been then found that the change in the surface temperature of the metal-covered gadolinium wire is smaller in proportion to a decrease in the area occupied by the gadolinium wire in the cross section perpendicular to the longitudinal direction of the metal-covered gadolinium wire, namely, an increase in the area occupied by the clad layer therein. Therefore, the proportion of the area occupied by the gadolinium wire in the cross sectional area is preferably within the above range in order that a sufficient change in the surface temperature (the amount of cold energy) as the metal-covered gadolinium wire rod is exhibited, and thus, when the metal-covered gadolinium wire rod is used as the magnetic refrigeration material in the magnetic refrigeration technology utilizing the magnetocaloric effect, it exerts a sufficient effect of processability by formation of the clad layer while having an enhanced heat-exchange efficiency with the refrigerant. Herein, a sufficient change in the surface temperature (the amount of cold energy) exhibited as the metal-covered gadolinium wire rod is preferably 50% or more relative to the change in the surface temperature of the gadolinium wire covered with no metal.

In view of being used in the magnetic refrigeration technology utilizing magnetocaloric effect, the metal-covered gadolinium wire rod of the present embodiment is preferably one where no gadolinium core is exposed even at both ends thereof, and therefore the both ends are preferably sealed by plating with the metal material used for formation of the clad layer, or sealed by a resin material or the like. If the gadolinium core is exposed at the both ends, the gadolinium core may be corroded depending on the difference in ionization tendency between the gadolinium core and the clad layer, and thus the both ends can be sealed to thereby properly prevent such a failure.

<<Magnetic refrigerator>>

Next, a magnetic refrigerator 1 to which the gadolinium wire rod and the metal-covered gadolinium wire rod of the present embodiment described above are applied will be described.

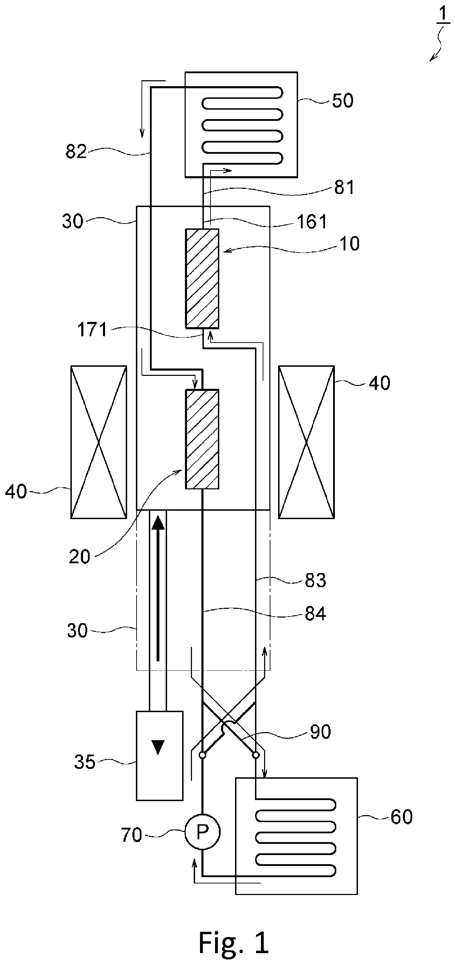

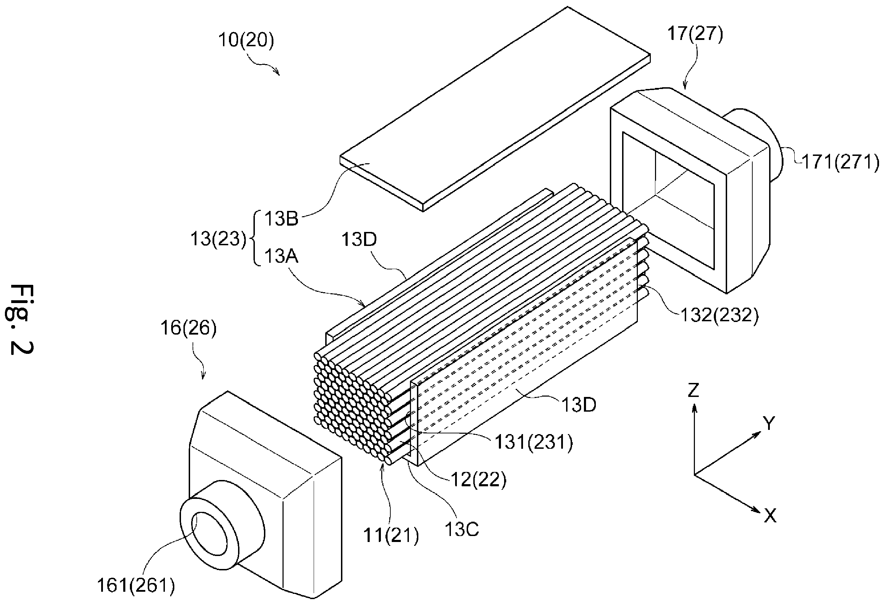

Figure 1 is a view illustrating the entire configuration of a magnetic refrigerator 1 including first and second MCM heat exchangers 10 and 20 according to an embodiment of the present invention. Figure 2 is an exploded perspective view illustrating the configuration of the first and second MCM heat exchangers 10 and 20 according to the present embodiment.

The magnetic refrigerator 1 in the present embodiment is a heat pump apparatus utilizing the magnetocaloric effect, and includes first and second MCM heat exchangers 10 and 20, a piston 30, a permanent magnet 40, a low-temperature heat exchanger 50, a high-temperature heat exchanger 60, a pump 70, pipes 81 to 84 and a changeover valve 90, as illustrated in Figure 1.

As illustrated in Figure 2, the first MCM heat exchanger 10 includes an aggregate 11 including a plurality of linear objects 12, a case 13 through which the aggregate 11 is inserted, and a first adapter 16 and a second adapter 17 connected to the case 13. Herein, the first MCM heat exchanger 10 and the second MCM heat exchanger 20 are similarly configured, therefore only the configuration of the first MCM heat exchanger 10 is described below, and the description about the configuration of the second MCM heat exchanger 20 is omitted and the description about the configuration of the first MCM heat exchanger 10 is incorporated thereto. In Figure 2, the first MCM heat exchanger 10 is illustrated, and the corresponding symbols with respect to the second MCM heat exchanger 20 are merely noted in brackets and illustration is omitted.

The linear objects 12 are each a wire rod which is formed from a magnetocaloric effect material exerting the magnetocaloric effect (MCM: Magnetocaloric Effect Material) and which has a circular cross-sectional shape. When a magnetic field is applied to the linear objects 12 formed from MCM, electron spins are aligned to result in a decrease in magnetic entropy, and the linear objects 12 generate heat to provide temperature rise. On the other hand, when the magnetic field is removed from the linear objects 12, electron spins are disordered to result in an increase in magnetic entropy, and the linear objects 12 absorb heat to provide temperature drop.

In the present embodiment, at least one selected from the gadolinium wire rod and the metal-covered gadolinium wire rod of the present embodiment described above is used in the linear objects 12.

The aggregate 11 is constituted of a bundle of the plurality of linear objects 12 mutually arranged in parallel. The side surfaces of adjacent linear objects 12 are in contact with each other, and a flow path is consequently formed therebetween.

The aggregate 11 of the linear objects 12 is inserted through the case 13. As illustrated in Figure 2, the case 13 is formed in a rectangular tubular manner. A first opening 131 and a second opening 132 are formed at one end and another end in the axis direction of the case 13, respectively.

The case 13 includes a linear object-receiving portion 13A whose cross sectional shape orthogonal to the axis direction is a U-shape, and a rectangular plate-shaped lid portion 13B. The linear object-receiving portion 13A includes a bottom portion 13C forming the bottom portion of the case 13, and a pair of wall portions 13D forming the side wall portions located at both sides of the case 13. The end in the width direction of the lid portion 13B is secured to the upper end of the wall portion 13D, thereby allowing the upper portion of the linear object-receiving portion 13A to be closed by the lid portion 13B.

As illustrated in Figure 2, the first adapter 16 is connected to the first opening 131 of the case 13, and the second adapter 17 is connected to the second opening 132 thereof. The first adapter 16 has a first connection opening 161 at a location opposite to a location at which the first adapter 16 is to be connected to the first opening 131. The first connection opening 161 is communicated with the low-temperature heat exchanger 50 via a first low-temperature pipe 81. The second adapter 17 also has a second connection opening 171 at a location opposite to a location at which the second adapter 17 is to be connected to the second opening 132. The second connection opening 171 is communicated with the high-temperature heat exchanger 60 via a first high-temperature pipe 83.

For example, as illustrated in Figure 1, when an air conditioning apparatus using the magnetic refrigerator 1 of the present embodiment serves as a cooling apparatus, heat exchange is performed between the low-temperature heat exchanger 50 and air in a room to thereby cool the room, and also heat exchange is performed between the high-temperature heat exchanger 60 and air outside the room to thereby release heat outside the room. On the other hand, when the air conditioning apparatus serves as a heating apparatus, heat exchange is performed between the high-temperature heat exchanger 60 and air in a room to thereby warm the room, and also heat exchange is performed between the low-temperature heat exchanger 50 and air outside the room to thereby absorb heat from the outside of the room.

As described above, a circulation path including the four MCM heat exchangers 10, 20, 50 and 60 is formed by the two low-temperature pipes 81 and 82 and the two high-temperature pipes 83 and 84, and a liquid medium is pumped into the circulation path by the pump 70. Specific examples of the liquid medium can include liquids such as water, an antifreeze liquid, an ethanol liquid or a mixture thereof.

The two MCM heat exchangers 10 and 20 are received in the piston 30. The piston 30 can reciprocate between a pair of permanent magnets 40 by an actuator 35. Specifically, the piston 30 can move from a position indicated in Figure 1 to a position indicated by a dashed-dotted line in Figure 1, and reciprocates between such points.

The changeover valve 90 is provided on each of the first high-temperature pipe 83 and the second high-temperature pipe 84. The changeover valve 90 interlocks with the movement of the piston 30, to switch a destination to which the liquid medium is to be fed by the pump 70, to the first MCM heat exchanger 10 or the second MCM heat exchanger 20, and also switch a destination to which the high-temperature heat exchanger 60 is to be connected, to the second MCM heat exchanger 20 or the first MCM heat exchanger 10.

The piston 30 is then moved from a position indicated by a dashed-dotted line in Figure 1 to a position indicated in Figure 1, thereby demagnetizing the linear objects 12 of the first MCM heat exchanger 10 to result in temperature drop, and on the other hand, magnetizing the linear objects 22 of the second MCM heat exchanger 20 to result in temperature rise.

Simultaneously, a pathway (pathway indicated by an arrow in Figure 1) including the following in the following order: pump 70 → first high-temperature pipe 83 → first MCM heat exchanger 10 → first low-temperature pipe 81 → low-temperature heat exchanger 50 → second low-temperature pipe 82 → second MCM heat exchanger 20 → second high-temperature pipe 84 → high-temperature heat exchanger 60 → pump 70; is formed by the changeover valve 90.

Therefore, the liquid medium is cooled by the linear objects 12 of the first MCM heat exchanger 10, having a decreased temperature by demagnetizing, and the liquid medium is fed to the low-temperature heat exchanger 50 to cool the low-temperature heat exchanger 50. On the other hand, the liquid medium is heated by the linear objects 22 of the second MCM heat exchanger 20, having an increased temperature by magnetizing, and the liquid medium is fed to the high-temperature heat exchanger 60 to heat the high-temperature heat exchanger 60.

Next, the piston 30 is moved from a position indicated in Figure 1 to a position indicated by a dashed-dotted line in Figure 1, thereby magnetizing the linear objects 12 of the first MCM heat exchanger 10 to result in temperature rise, and on the other hand, demagnetizing the linear objects 22 of the second MCM heat exchanger 20 to result in temperature drop. Simultaneously, the same pathway as described above is formed by the changeover valve 90, thereby cooling the low-temperature heat exchanger 50 and heating the high-temperature heat exchanger 60.

The piston 30 then reciprocates repeatedly, and a magnetic field is repeatedly applied to and removed from the linear objects 12 and 22 of the first and second MCM heat exchangers 10 and 20, thereby continuously cooling the low-temperature heat exchanger 50 and heating the high-temperature heat exchanger 60.

Examples

Hereinafter, the present invention will be more specifically described with reference to Examples, but the present invention is not limited to these Examples.

«Example 1»

<Production of swaged material>

A round gadolinium rod material of $\varphi$12 mm $\times$ 120 mm was cut out from a commercially available gadolinium casting material (including gadolinium as a main component). The round rod material cut out was subjected to hot swaging at a reduction of area of 20% ten times repeatedly with being pre-heated to 500°C, thereby producing a gadolinium wire having a reduction of area of 95.3% relative to the round rod material. Herein, the diameter (wire diameter) of the resulting gadolinium wire was 2.6 mm.

<Measurement of segregated phase containing fluorine atom and/or chlorine atom with respect to gadolinium wire rod after hot swaging>

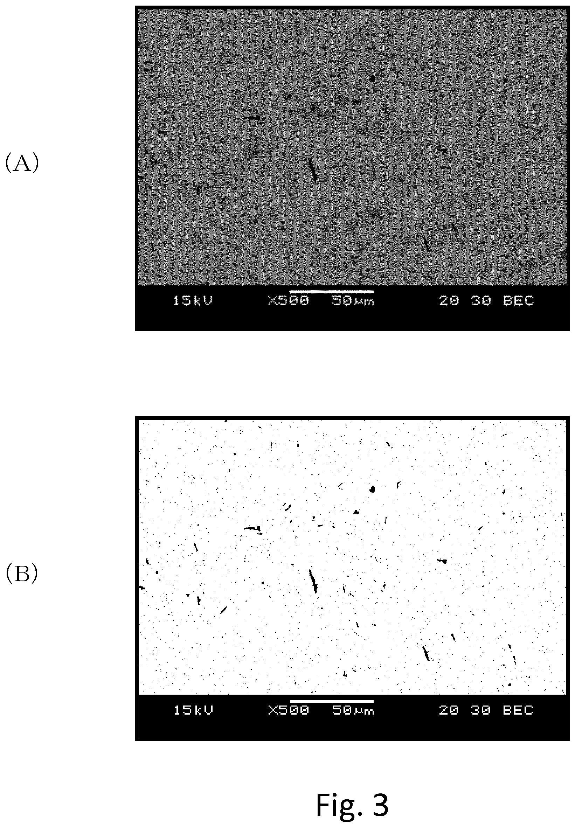

The gadolinium wire rod obtained above was cut at any transverse section (cross section perpendicular to the wire rod longitudinal direction), and a cut portion was embedded in an epoxy resin and mechanically polished to thereby expose a cross section, thereby producing a measurement sample. A reflection electron image was taken by a scanning electron microscope (product name "JSM-5610LV", manufactured by JEOL Ltd.) at any five locations of the resulting measurement sample. The conditions here were as follows: output: 15 kV, operating distance: 20 mm, spot size: 30 mm and magnification: 500-fold. The resulting five reflection electron images were then acquired as an image having a visual field of 1280 $\times$ 960 pixels at a resolution of 5 pixels/$\mu$m. The resulting reflection electron image is illustrated in Figure 3(A).

In the resulting reflection electron image, a visual field of 1280 $\times$ 830 pixels = 256 $\mu$m $\times$ 166 $\mu$m, where a label region was removed, of an image size of 1280 $\times$ 960 pixels was defined as an object to be analyzed, and subjected to image analysis using image analysis software (product name "Image J 1.49 ver.", manufactured by National Institute of Health). Specifically, Image type was read as 8 bit in the image analysis software, and analysis was performed at a scale setting of 5 pixels/$\mu$m. Herein, the lower limit and the upper limit of the grayscale divided to 256 tones were set to 0 and 30, respectively, with respect to the threshold of Threshold in the setting of the image analysis software, and thus binarization processing was performed. According to the present Example, such a threshold could be set to thereby properly detect the segregated phase containing fluorine atom and/or chlorine atom. The resulting reflection electron image after binarization processing is illustrated in Figure 3(B). In Figure 3(B), a black portion corresponds to a portion where the segregated phase containing fluorine atom and/or chlorine atom is present.

Next, the resulting reflection electron image after binarization processing was subjected to detection using an Analyze function of the image analysis software, the segregated phase containing fluorine atom and/or chlorine atom detected was approximated to a circle having the same area, based on the number of pixels on the image, to thereby determine a circle equivalent diameter, and the circle equivalent diameter was defined as the particle size of the segregated phase containing fluorine atom and/or chlorine atom. Herein, the size of Analyze particles in Analyze function of the image analysis software was set to 1-Infinity, and a fine particle having a particle size of 1 $\mu$m or less was excluded from the measurement subjects from the viewpoint that any measurement error and any influence of a heterogeneous phase other than the segregated phase containing fluorine atom and/or chlorine atom were removed. Furthermore, exclude on edge as an option of the image analysis software was used in image analysis, and any particle striding over the edge of the reflection electron image was also excluded from the measurement subjects.

The reflection electron images obtained at any five locations were each subjected to the above measurement, and the average particle size of the segregated phase containing fluorine atom and/or chlorine atom was determined by determining the arithmetic average value from the resulting particle size of the segregated phase containing fluorine atom and/or chlorine atom. Herein, the average particle size determined from the reflection electron images obtained at the five locations of the resulting swaged material obtained in Example 1 was 1.9 $\mu$m.

In addition to the above, the reflection electron images obtained at any five locations were also subjected to the above measurement, and the number of particles having a particle size of 5 $\mu$m or more was counted based on the particle size of the resulting segregated phase containing fluorine atom and/or chlorine atom, thereby determining the number of segregated phase containing fluorine atom and/or chlorine atom(s) with a particle size of 5 $\mu$m or more, present in the visual field range of 256 $\mu$m × 166 $\mu$m. The value obtained by dividing the total number (total number in measurement at five locations) of segregated phase containing fluorine atom and/or chlorine atom(s) with a particle size of 5 $\mu$m or more by 256 $\mu$m × 166 $\mu$m × 5 being the measurement range, namely, the presence density of the segregated phase of 5 $\mu$m or more (the presence density of a segregated phase containing fluorine atom and/or chlorine atom with a particle size of 5 $\mu$m or more) was 2.5 × $10^{-5}$/$\mu$m². Herein, the segregated phase containing fluorine atom and/or chlorine atom detected by the above method in the present Example was subjected to componential analysis by EDS (Energy Dispersive Spectroscopy) analysis, and as a result, the phase was confirmed to be a fluorine atom- and/or chlorine atom-containing phase also by EDS analysis.

<Production of drawn material>

The swaged material having a diameter (wire diameter) of 2.6 mm, obtained above, was repeatedly extended using a die, with the target diameter after drawing (diameter after drawing) being set to 0.25 mm, under a condition where the reduction of area per extending was 20%, thereby providing a drawn material having a wire diameter of 0.25 mm (the total reduction of area was 99% or more). In the present Example, favorable extending could be conducted without the occurrence of failures such as breakage and/or sticking to the die. In addition, no intermediate heat treatment was performed during drawing.

<Anneal treatment>

The drawn material obtained above was then subjected to an anneal treatment under a nitrogen atmosphere in each condition shown in Table 1 below, thereby providing a gadolinium wire rod of each of Sample Nos. 1 to 7 (the gadolinium wire rod of Sample No. 1 was not subjected to a heat treatment).

<Measurement of segregated phase containing fluorine atom and/or chlorine atom of drawn material after anneal treatment>

The resulting drawn material after the anneal treatment was then subjected to measurement of the segregated phase containing fluorine atom and/or chlorine atom (namely, measurement of each of the average particle size of the segregated phase and the presence density of the segregated phase of 5 $\mu$m or more) in the same manner as described above. The resulting drawn material after the anneal treatment, however, was small in wire diameter and the cross-sectional area thereof was smaller than the visual field range of 256 $\mu$m × 166 $\mu$m, and therefore the drawn wire rod was cut at any five locations and all of any five cross sections perpendicular to the wire rod longitudinal direction were subjected to the measurement, to thereby providing the measurement results. As the measurement results, the average particle size of the segregated phase was 1.9 $\mu$m or less and the presence density of the segregated phase of 5 $\mu$m or more was 2.5 × $10^{-5}$/$\mu$m² or less in all of the gadolinium wire rods of Sample Nos. 1 to 7 (the gadolinium wire rod of Sample No. 1 was not subjected to a heat treatment) (the same result was also confirmed as in Sample Nos. 8 and 9 of Example 2 described below.). Figure 4(A) and Figure 4(B) illustrate a reflection electron image of the drawn wire rod of Sample No. 1 and a reflection electron image of the drawn wire rod after binarization processing of Sample No. 1, respectively.

<Vickers hardness (Hv)>

The resulting gadolinium wire rod of each of Sample Nos. 1 to 7 was subjected to Vickers hardness (Hv) measurement according to the following method. That is, each of the gadolinium wire rods was cut at an interval of 10 cm to provide five rods, and the transverse section of each of the resulting five cut samples was embedded in an epoxy resin and polished to thereby smoothen the transverse section, thereby providing five measurement samples with respect to the transverse section of the gadolinium wire rod of each of Sample Nos. 1 to 7. A manual hardness tester (HM-200 system A manufactured by Mitutoyo Corporation) was used as a Vickers hardness meter to apply 50 g of a load for 10 seconds to the center portion of the transverse section of the gadolinium wire rod of each of the resulting five measurement samples with respect to the gadolinium wire rod of each of Sample Nos. 1 to 7, thereby subjecting the indentation produced by such application to measurement with an indentation measurement system of the tester to thereby measure the Vickers hardness of each of the five measurement samples with respect to the gadolinium wire rod of each of Sample Nos. 1 to 7. The maximum value and the minimum value were then excluded from the resulting measurement values of the Vickers hardness of the five measurement samples, the remaining three measurement values were used to calculate the average value, and the resulting average value was determined as the Vickers hardness (Hv) of the gadolinium wire rod, with respect to the gadolinium wire rod of each of Sample Nos. 1 to 7.

<Measurement of amount of entropy change $\Delta S_m$>

Three measurement samples each having a length of 5 mm were taken from the resulting gadolinium wire rod of each of Sample Nos. 1 to 7, and the three measurement samples each having a length of 5 mm, taken, was subjected to magnetic susceptibility measurement with a magnetic property measurement apparatus ("MPMS-5T" manufactured by Quantum Design Japan) in the temperature range from 240 to 330 K. Herein, the magnetic susceptibility measurement was performed at 1 T, and the magnetic field application direction was a direction in parallel to the longitudinal direction of each of the measurement samples (namely, the magnetic field application direction was the same direction as the longitudinal direction of each of the measurement samples). The amount of entropy change $\Delta S_m$ at each temperature was then calculated from the magnetic susceptibility obtained in each condition. Figure 5 illustrates a relationship between the measurement temperature and the amount of entropy change $\Delta S_m$ of the gadolinium wire rod of each of Sample Nos. 1 to 7, obtained by the measurement.

[Table 1]

Table 1

| | Anneal temperature (°C) | Anneal time (min) | Diameter of gadolinium wire rod (mm) | Vickers hardness (Hv) | Maximum value $S_{max}$ of absolute value of amount of entropy change |
|---|---|---|---|---|---|
| Sample No.1 | No anneal | | 0.25 | 125.7 | 2.65 |
| Sample No.2 | 300 | 5 | 0.25 | 114.7 | 3.08 |
| Sample No.3 | 300 | 10 | 0.25 | 100.9 | 3.18 |
| Sample No.4 | 300 | 20 | 0.25 | 86.1 | 3.34 |
| Sample No.5 | 300 | 30 | 0.25 | 78.3 | 3.29 |
| Sample No.6 | 300 | 60 | 0.25 | 66.7 | 3.35 |
| Sample No.7 | 300 | 3600 | 0.25 | 66.3 | 3.44 |

As shown in Table 1, it could be confirmed that the gadolinium wire rod of each of Sample Nos. 2 to 7, having a Vickers hardness (Hv) of less than 120, was high in the maximum value $S_{max}$ of the absolute value of the amount of entropy change in a condition of 1 T and was enhanced in magnetic refrigeration ability. On the other hand, the gadolinium wire rod of Sample No. 1, having a Vickers hardness (Hv) of 120 or more, was low in the maximum value $S_{max}$ of the absolute value of the amount of entropy change and was inferior in magnetic refrigeration ability.

<<Example 2>>

A gadolinium wire rod of each of Sample No. 8 and Sample No. 9 was obtained in the same manner as in Example 1 except that a gadolinium wire rod after hot swaging, obtained by hot swaging in the same manner as in Example 1, was drawn and subjected to an anneal treatment in the following conditions.

<Sample No. 8>

   Drawing: target diameter (diameter after drawing): 0.25 mm

Anneal treatment: 450°C, 15 minutes

<Sample No. 9>

Drawing: target diameter (diameter after drawing): 0.5 mm,

Anneal treatment: 500°C, 5 minutes

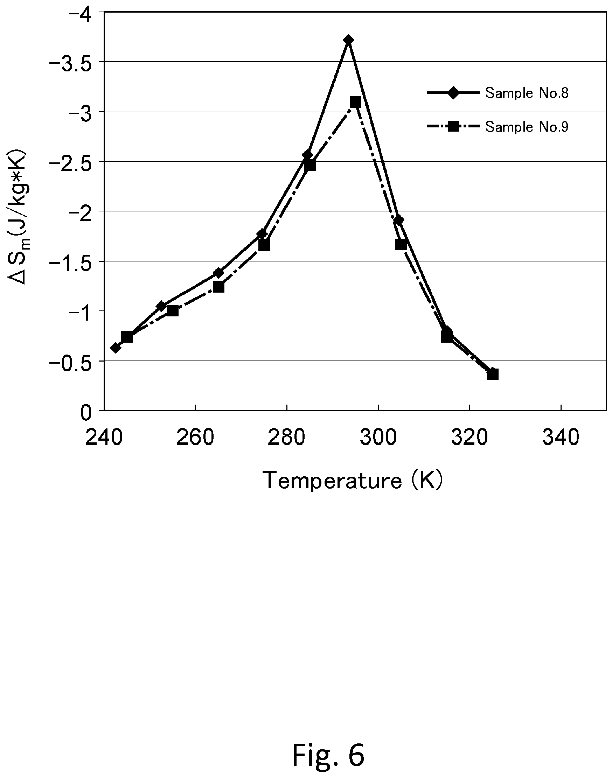

The gadolinium wire rod of each of Sample No. 8 and Sample No. 9 was then subjected to the same measurement as in Example 1. The obtained measurement results of the Vickers hardness (Hv) and the maximum value $S_{max}$ of the absolute value of the amount of entropy change are shown in Table 2, and the obtained measurement results of the amount of entropy change $\Delta S_m$ are illustrated in Figure 6.

[Table 2]

Table 2

| | Anneal temperature (°C) | Anneal time (min) | Diameter of gadolinium wire rod (mm) | Vickers hardness (Hv) | Maximum value $S_{max}$ of absolute value of amount of entropy change |
|---|---|---|---|---|---|
| Sample No.8 | 450 | 15 | 0.25 | 55 | 3.71 |
| Sample No.9 | 500 | 5 | 0.5 | 55 | 3.09 |

As shown in Table 2, it could be confirmed that Sample No. 8 having a diameter of 0.25 mm was higher in the maximum value $S_{max}$ of the absolute value of the amount of entropy change in a condition of 1 T and was more enhanced in magnetic refrigeration ability than Sample No. 9 having a diameter of 0.5 mm, when both Samples had the same Vickers hardness (Hv).

**Claims**

1. A gadolinium wire rod comprising gadolinium as a main component and having a Vickers hardness (HV) 120 or less.

2. The gadolinium wire rod according to claim 1, wherein an average particle size of a segregated phase containing fluorine atom and/or chlorine atom is 2 $\mu$m or less.

3. The gadolinium wire rod according to claim 1 or 2, wherein a presence density of a segregated phase containing fluorine atom and/or chlorine atom with a particle size of 5 $\mu$m or more is $4.7 \times 10^{-5}/\mu m^2$ or less.

4. The gadolinium wire rod according to any of claims 1 to 3, wherein the gadolinium wire rod has a diameter of less than 0.5 mm.

5. A metal-covered gadolinium wire rod comprising the gadolinium wire rod according to any of claims 1 to 4 and a clad layer comprising, as a main component, a metal other than gadolinium, the clad layer being provided on an outer periphery of the gadolinium wire rod.

6. A heat exchanger comprising:

a plurality of wire rods formed of a magnetic refrigeration material; and
a case housing the plurality of wire rods;
wherein the wire rods are each the gadolinium wire rod according to any of claims 1 to 4 or the metal-covered gadolinium wire rod according to claim 5.

7. A magnetic refrigerator comprising the heat exchanger according to claim 6.

Fig. 1

Fig. 2

(A)

(B)

Fig. 3

(A)

(B)

Fig. 4

Fig. 5

Fig. 6

Europäisches
Patentamt

European
Patent Office

Office européen
des brevets

# EUROPEAN SEARCH REPORT

Application Number

EP 18 15 9574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BURDETT, C.F. AND LAYNG, R.B.: "AN INTERNAL FRICTION PEAK IN POLYCRYSTALLINE GADOLINIUM", BRIT. J. APPL. PHYS., vol. 18, 1 January 1967 (1967-01-01), pages 367-368, XP002785212, GREAT BRITAIN * page 367 * | 1-7 | INV. C22C28/00 B32B15/01 F25B21/00 H01F1/01 |
| X | WONG, T. AND SUNTJENS, J.M.: "DEVELOPMENT OF RARE EARTH REGENERATOR MATERIALS IN FINE WIRE FORM" In: Leonard T. Summers(eds): "ADVANCES IN CRYOGINEERING", 1 January 1996 (1996-01-01), Springer, Boston, MA, XP002785210, ISBN: 978-1-4757-9061-0 vol. 42, pages 439-440, DOI: 10.1007/978-1-4757-9059-7_58, * abstract * | 1-7 | |

TECHNICAL FIELDS
SEARCHED     (IPC)

C22C
B32B
F25B
H01F

The present search report has been drawn up for all claims

| Place of search | Date of completion of the search | Examiner |
|---|---|---|
| Munich | 1 October 2018 | González Junquera, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010077484 A

- JP 2013064588 A